Europäisches Patentamt

European Patent Office

Office européen des brevets

(11) Veröffentlichungsnummer: **0 524 486 A1**

# EUROPÄISCHE PATENTANMELDUNG

(21) Anmeldenummer: **92111546.5**

(22) Anmeldetag: **08.07.92**

(51) Int. Cl.5: **B32B** 27/30, B65D 65/40

(30) Priorität: **12.07.91 DE 4123127**

(43) Veröffentlichungstag der Anmeldung:
**27.01.93 Patentblatt 93/04**

(84) Benannte Vertragsstaaten:
**AT BE CH DE DK ES FR GB GR IT LI LU MC NL PT SE**

(71) Anmelder: **HOECHST AKTIENGESELLSCHAFT**
**Postfach 80 03 20**
**W-6230 Frankfurt am Main 80(DE)**

(72) Erfinder: **Küchler, Manfred**
**Bleibiskopfstrasse 5**
**W-6370 Oberursel(DE)**
Erfinder: **Reinhard, Günter**
**Hegarstrasse 23**
**W-6000 Frankfurt/Main 71(DE)**

(54) **Mehrschichtenverbundfolie mit verbesserter Gasbarrierewirkung.**

(57) Herstellung von thermoplastisch verformbaren Mehrschichtenverbundfolien mit verbesserter Gasbarrierewirkung, bestehend aus mindestens einer Gasbarrierefolie auf Basis von hochverseiftem, weichmacherhaltigem Polyvinylalkohol mit einseitigen oder beidseitigen wasserunlöslichen, wasser- und wasserdampfundurchlässigen und gegebenenfalls in organischen Lösungsmitteln unlöslichen Kunststoffdeckfolien, welche vollflächig mittels spezieller Adhäsivschichten, die Haftklebereigenschaften besitzen, auf die Gasbarrierefolie kaschiert sind. Die Adhäsivschichten bestehen aus Copolymerisaten, deren Einfriertemperatur $T_G$ im Bereich von -50 bis -10 °C liegt. Die Herstellung der Gasbarrierefolie kann durch Blasextrusion erfolgen. Der Folienblasschlauch wird bei Raumtemperatur nach Aufschneiden als Flachfolie beidseitig über Auftragswalzen mit der Adhäsivschicht beschichtet, getrocknet und durch Tempern entschrumpft. Danach wird die resultierende selbsthaftende Gasbarrierefolie mittels Kaschierwalzen oder auf einem Kalander mit Kunststoffdeckfolien zu einem praktisch wasser- und gasundurchlässigen sowie gegebenenfalls lösungsmitteldichten Mehrschichtenfolienverbund kaschiert.

Verwendung der Mehrschichtenverbundfolien zur wasser- und gasdichten, insbesondere sauerstoffdichten, wasserdampfdichten, aromadichten und gegebenenfalls lösungsmitteldichten Verpackung bzw. Umhüllung diverser Produkte.

EP 0 524 486 A1

Die Erfindung betrifft thermoplastisch verformbare Mehrschichtenverbundfolien mit verbesserter Gasbarrierewirkung, bestehend aus mindestens einer Gasbarrierefolie auf Basis von Polyvinylalkohol (PVAL) mit mindestens einseitiger, vorzugsweise beidseitigen wasserunlöslichen und gegebenenfalls in organischen Lösungsmitteln unlöslichen Kunststoffdeckfolien, wobei letztere vollflächig mittels spezieller Adhäsivschichten mindestens einseitig, vorzugsweise beidseitig, auf die Gasbarrierefolien kaschiert sind. Die Gasbarrierefolien enthalten hochverseiften PVAL und die Mehrschichtenverbundfolien besitzen, vergleichsweise zum Stand der Technik, eine verbesserte Gasbarrierewirkung, insbesondere gegenüber Sauerstoff und gegenüber Aromastoffen, sowie vorteilhafte mechanische Eigenschaften.

Mehrschichtenverbundfolien mit guten Gasbarriereeigenschaften sind bereits bekannt und werden vielseitig als Verpackungsfolien verwendet. Sie enthalten als Gasbarrieren bevorzugt Folien auf der Basis von Ethylen-Vinylalkohol-Copolymerisaten mit wasserunlöslichen Deckfolien (vgl. z. B. EP-PS 0 118 060). Ihre Gasbarrierewirkung z. B. gegenüber Sauerstoff ist meist schlechter als 5 cm$^3$/m$^2 \cdot$d$\cdot$bar bei 93 % relativer Luftfeuchte, gemessen nach DIN 53380, was für zahlreiche Anwendungen nicht befriedigend ist.

Die Herstellung der Mehrschichtenverbundfolien erfolgt im allgemeinen nach dem Coextrusionsverfahren unter Kaschierung der coextrudierten Einzelfolien zu den gewünschten Folienverbunden unter Verwendung von Haftvermittlern, wie z. B. Ionomere oder modifizierte Polyolefine.

Die Verwendung von üblichem Polyvinylalkohol (PVAL) als Gasbarrierefolie ist ebenfalls bereits bekannt und kann zu besseren Gasbarrierewirkungen führen als z. B. die Verwendung der obengenannten und relativ teueren EthylenVinylalkohol-Copolymerisate. Letztere lassen sich jedoch ohne Weichmacherzusätze unschwer extrudieren und coextrudieren, im Gegensatz zu üblichen PVAL-en, die sich nur schwierig und unter erheblichen Weichmacherzusätzen thermoplastisch formen und extrudieren lassen. Darüber hinaus lassen sich PVAL-Folien nicht mit üblichen wasserunlöslichen Deckfolien aus unpolaren Polymeren, beispielsweise Polyolefinen, wie Polyethylen oder Polypropylen, oder mit Polyvinylchlorid oder Polyvinylidenchlorid ohne Verwendung von Haftungsbrücken thermoplastisch verbinden oder kaschieren, so daß Folienverbunde mit PVAL-Folien bisher nur vereinzelt verfügbar geworden sind. So ist aus der EP-PS 0 080 664 ein spezielles Extrusionsverfahren zur Herstellung von flächenförmigen Gebilden und Mehrschichtenelementen, wie z. B. photopolymeren Druckplatten, auf der Basis von teilverseiften PVAL-en mit Polymerisationsgraden $\overline{DP}_W$ von 250 bis 3000 bekannt. Dabei werden sowohl für photopolymere Druckplatten als auch für sonstige Zwecke vorzugsweise teilverseifte Polyvinylacetate mit Verseifungsgraden von 80 bis 82 Mol.-% und Polymerisationsgraden $\overline{DP}_W$ von 200 bis 500 verwendet. Ihre thermoplastische Verarbeitung erfolgt ohne vorhergehende separate Vorplastifizierung direkt in einem Zweischneckenextruder und die resultierende PVAL-Folie soll auch zur Herstellung von Laminaten oder Verbundplatten geeignet sein. Dazu soll entweder auf einer oder auf beiden Seiten der PVAL-Folie ohne Zwischenschicht eine weitere Folie, z. B. aus einem anderen Kunststoff oder einem Metallblech, auf einem Walzenstuhl aufkaschiert werden. Es hat sich aber gezeigt, daß sich auf diese Weise keine befriedigende innige Haftung zwischen der PVAL-Folie und der aufkaschierten Folie aus einem anderen Kunststoff erzielen und darüber hinaus mit teilverseiften PVAL-en sich auch praktisch keine wesentliche Verbesserung der Gasbarrierewirkung, vergleichsweise zum bekannten Stand der Technik, erreichen läßt. Teilverseifte PVAL-e sind als Gasbarrierefolienmaterial daher wenig geeignet und die Gasbarrierewirkung ihrer Folien verschlechtert sich außerdem bei Wasseraufnahme erheblich.

Der Erfindung lag somit die Aufgabe zugrunde, Mehrschichtenverbundfolien mit verbesserter Gasbarrierewirkung unter Verwendung von preisgünstig zugänglichem PVAL als Gasbarrierefolien verfügbar zu machen, welche die aufgezeigten Nachteile nicht aufweisen sowie einfach und kostengünstig herzustellen sind.

Es wurde nun überraschenderweise gefunden, daß durch Verwendung von hochverseiften PVAL-en in Gasbarrierefolien eine merkliche Steigerung der Gasbarrierewirkung erzielbar ist und daß man eine innige Verbindung von PVAL-Gasbarrierefolien und wasserunlöslichen Kunststoffdeckfolien dadurch erzielen kann, daß man die letzteren unter Verwendung von speziellen wasserunlöslichen Haftkleberadhäsivschichten auf die PVAL-Folie aufkaschiert. Besonders bevorzugt ist hierbei die Verwendung von weichmacherhaltigen Extrusionsblasfolien aus hochverseiften PVAL-en mit durchschnittlichen Polymerisationsgraden $\overline{DP}_W$ von > 1500.

Gegenstand der Erfindung sind daher Mehrschichtenverbundfolien, die thermoplastisch verformbar sind, mit verbesserter Gasbarrierewirkung, bestehend aus mindestens einer Gasbarrierefolie auf Basis von PVAL, die einseitig oder beidseitig mit einer wasserunlöslichen und gegebenenfalls in organischen Lösungsmitteln unlöslichen Polymerfolie als Wasser- und Wasserdampfsperrschicht kaschiert ist, wobei die Mehrschichtenverbundfolien auch mehrere gleiche oder verschiedene Gasbarrierefolien mit zwischenlagigen wasser- und wasserdampfsperrenden Polymerfolien enthalten können, dadurch gekennzeichnet, daß die Gasbarrierefolie hochverseiften PVAL enthält und mit der oder den wasser- und wasserdampfsperrenden wasserunlöslichen und gegebenenfalls in organischen Lösungsmitteln unlöslichen Polymerfolien über eine Adhäsivschicht, die Haftklebereigenschaften besitzt und für Wasser und Wasserdampf undurchlässig ist, einseitig oder beidseitig, vorzugsweise beidseitig, kaschiert ist.

Die Gasbarrierefolie besitzt vorzugsweise eine Schichtdicke im Bereich von 10 bis 100 $\mu$m, insbesondere 40 bis 60, besonders bevorzugt 45 bis 55 $\mu$m. Sie enthält vorzugsweise hochverseiften PVAL, der eine Esterzahl von < 10 mg KOH/g, einen Verseifungsgrad von > 98 Mol.-%, einen Restacetylgruppengehalt von < 1 Gew.-% und vorzugsweise einen mittleren $\overline{DP}_W$ von > 1500, jeweils bezogen auf den PVAL, aufweist. Die Gasbarrierefolie enthält ferner vorzugsweise bis zu 50 Gew.-%, insbesondere 12 - 20 Gew.-%, eines aliphatischen $C_2$- bis $C_6$-Polyols oder oligomere Poly($C_2$-$C_6$)-alkylenglykolätherpolyole, vorzugsweise Glycerin, als PVAL-Weichmacher, wobei der Weichmacher vorzugsweise den Vorschriften für Lebensmittelverpackungen entsprechen soll, gegebenenfalls bis zu 5 Gew.-% Wasser, gegebenenfalls bis zu 12 Gew.-% eines Fließhilfsmittels und gegebenenfalls vorzugsweise bis zu 1 Gew.-% eines Antiblockmittels, jeweils bezogen auf den PVAL.

Die Gasbarrierefolie ist vorzugsweise eine nach bekannten Methoden thermoplastisch geformte weichmacherhaltige PVAL-Extrusionsblasfolie mit Gehalten von 5 bis 50 Gew.-%, vorzugsweise 12 - 20 Gew.-%, aliphatischen $C_2$-$C_6$-Polyolen oder oligomeren Poly($C_2$-$C_6$)-alkylenglykolätherpolyolen, vorzugsweise Glycerin, als Weichmacher und bis zu 5 Gew.-% Wasser, jeweils bezogen auf den PVAL, sowie gegebenfalls weiteren Verarbeitungshilfsmitteln, wie z. B. Fließhilfsmitteln und Antiblockmitteln. Es ist erforderlich, die PVAL-Extrusionsblasfolien nach erfolgter Herstellung und vor ihrer Weiterverarbeitung zu Verbundfolien durch Tempern bei 80 °C in üblicher Weise zu entschrumpfen und bei höheren Wassergehalten diese durch Trocknung auf einen Wert von < 5 Gew.-% $H_2O$, bezogen auf den PVAL, zu reduzieren.

Als Ausgangs-PVAL kommen für die Herstellung von erfindungsgemäß zu verwendenden Gasbarrierefolien vorzugsweise hochverseifte, hochmolekulare PVAL-Typen mit Verseifungszahlen von vorzugsweise > 98 bis 100 Mol.-% infrage, wie sie z. B. durch Hydrolyse oder Alkoholyse von hochmolekularen Polyvinylcarbonsäureestern, vorzugsweise Polyvinylacetat oder Polyvinylpropionat, besonders bevorzugt Polyvinylacetat, erhältlich sind. Geeignete handelsübliche PVAL-Typen sind z. B. die [R] Mowiol-Typen 20-98, 28-99, 56-98 und 66-100 der Fa. Hoechst AG. Besonders bevorzugt sind Mowiol 28-99 und 66-100. Die PVAL-e werden vorzugsweise in Form von weichmacherhaltigen und extern vorplastifizierten sog. Dry-Blends thermoplastisch verarbeitet. Unter Dry-Blends werden die in einem separaten Arbeitsgang bei Temperaturen bis zu 120 °C z.B. in einem Zwangsmischer vorplastifizierten und vorgranulierten Gemische aus PVAL, Weichmacher, Wasser, Fließhilfsmittel und Antiblockmittel verstanden, die sich problemlos extrudieren und zu Extrusionsblasfolien formen lassen, wobei die Anteile an Weichmacher und Wasser so zu bemessen sind, daß die Schmelztemperatur des Dry-Blends stets unterhalb der Zersetzungstemperatur des PVAL-s liegt, so daß bei der Extrusion keine thermische Zersetzung des PVAL-s erfolgen kann (vgl. z. B. EP-OS 0 004 587). Als Fließhilfsmittel enthalten die Dry-Blends vorzugsweise 2 bis 20 Gew.-%, insbesondere 7 bis 12 Gew.-%, Polymerisatpulver aus vorzugsweise wasserunlöslichen Polymeren, insbesondere sprühgetrocknetes Dispersionspolyvinylacetatpulver (z. B. [R] Mowilith-Pulver DS, ein in Wasser redispergierbares Polyvinylacetatpulver der Fa. Hoechst AG), und als Antiblockmittel vorzugsweise 0,1 bis 1 Gew.-%, insbesondere 0,3 bis 0,9 Gew.-%, jeweils bezogen auf den PVAL, hochdisperse Kieselsäure (z. B. [R] Aerosil der Fa. Degussa) oder Stearinsäure. Vorzugsweise werden die aus den Dry-Blends durch Blasextrusion erhältlichen weichmacherhaltigen PVAL-Folien nach ihrer Herstellung und vor ihrer erfindungsgemäßen Weiterverarbeitung zu Gasbarrierefolien durch Trocknung auf einen Wassergehalt von < 5 Gew.-%, bezogen auf den PVAL, gebracht und außerdem durch Tempern, z. B. bei 80 °C, entschrumpft.

Als Weichmacher für PVAL werden insbesondere Glycerin sowie Kombinationen aus Glycerin und Wasser verwendet. Geeignete Weichmacher sind ferner Verbindungen oder deren Gemische bzw. deren Kombinationen mit Wasser bzw. deren Kombinationen mit Glycerin und Wasser vorzugsweise aus der Gruppe der thermostabilen aliphatischen oligomeren Äther von ($C_2$-$C_6$)-Diolen mit vorzugsweise bis zu 10 Alkylenoxydgrundeinheiten im Molekül, insbesondere von ($C_2$-$C_6$)-Alkylenglykolen bzw. von ($C_2$-$C_6$)-Alkandiolen, vorzugsweise oligomere Äther von Ethylenglykol, Propylenglykol, Butylenglykol oder Mischäther aus diesen Glykolen, insbesondere Diethylenglykol, Triethylenglykol, Tetraethylenglykol, Pentaethylenglykol. Auch einfache unverätherte ($C_2$-$C_6$)-Alkylenglykole bzw. ($C_2$-$C_6$)-Alkandiole, insbesondere Ethylenglykol, Propylenglykol, Butylenglykol, können verwendet werden.

Anstelle der Verwendung von PVAL-Dry-Blends kann auch pulver- oder granulatförmiger PVAL in einem entsprechend ausgelegten Extruder, vorzugsweise z.B. einem Doppelschneckenextruder, oder in einer dem Extruder vorgeschalteten geeigneten Misch- und Plastifiziervorrichtung direkt mit den erforderlichen Mengen an Weichmacher, Wasser und gegebenenfalls Fließhilfsmittel und gegebenenfalls Antiblockmittel vermischt und plastifiziert und die Schmelztemperatur des Gemisches dadurch unter die Zersetzungstemperatur des PVAL gebracht werden. Bevorzugt ist jedoch bei den hochverseiften und hochmolekularen PVAL-en die Verwendung von extern vorplastifizierten weichmacherhaltigen PVAL-Dry-Blends.

Die Folienherstellung erfolgt vorzugsweise mittels eines Einschnecken-Blasextruders mit Entgasungsvorrichtung, dem der weichmacherhaltige PVAL-Dry-Blend zudosiert und der resultierende Folienblasschlauch nach dessen Abkühlen auf Raumtemperatur und Aufschneiden in Längsrichtung über eine Folienflachlegevorrichtung geführt und anschließend beidseitig über Auftragswalzen mit der Haftkleberadhäsivschicht beschichtet wird. Danach erfolgt die Trocknung der Haftkleberadhäsivschicht in einem Trockenkanal, wo bei erhöhter Temperatur gleichzeitig die Gasbarrierefolie und die Haftkleberadhäsivschichten getrocknet und die Folie entschrumpft werden. Danach wird die so erhaltene selbsthaftende Gasbarrierefolie mittels Kaschierwalzen oder auf einem Kalander bei Raumtemperatur beidseitig mit wasserunlöslichen und wasser- sowie wasserdampfsperrenden Kunststoffdeckfolien zu einem wasser- und gasundurchlässigen Mehrschichtenfolienverbund kaschiert, der bei Verwendung von Kunststoffdeckfolien, die in organischen Lösungsmitteln unlöslich sind, auch lösungsmittelundurchlässig ist. Gegebenenfalls wird die Gasbarrierefolie nur einseitig mit einer wasserunlöslichen und wasser- sowie wasserdampfsperrenden und gegebenenfalls lösungsmittelunlöslichen Kunststoffdeckfolie kaschiert und die Haftkleberadhäsivschicht auf der anderen Seite der Gasbarrierefolie mit einer abziehbaren silikonisierten Papierbahn (Releasepapier) belegt, um den Folienverbund später nach Abziehen des Deckpapiers zur Herstellung von Laminaten und Verbundplatten durch einfaches Aufkaschieren auf entsprechende Unterlagen verwenden zu können. Auch eine temporäre beidseitige Bedeckung der beidseitig mit Haftkleberadhäsivschichten beschichteten Gasbarrierefolie mit silikonisiertem Trennpapier bzw. Deckpapier bis zur späteren Verwendung zur Mehrschichtenfolienkaschierung ist möglich.

Die Adhäsivschicht mit Haftklebereigenschaften, vorstehend und nachstehend kurz Haftkleberadhäsivschicht genannt, besteht vorzugsweise aus einem Copolymerisat, dessen Einfriertemperatur $T_G$, gemessen mittels Differentialthermoanalyse (DTA), im Bereich von -50 bis -10 °C liegt und das in zusammenhängender Schichtform wasserunlöslich und wasserundurchlässig sowie weitgehend wasserdampfundurchlässig ist. Es wird vorzugsweise auf die den PVAL enthaltende Gasbarrierefolie einseitig oder vorzugsweise beidseitig aufgetragen, und zwar durch Aufspritzen, Aufwalzen oder Rakeln von Copolymerisatlösungen in organischen Lösungsmitteln oder von wäßrigen Copolymerisatdispersionen oder von Copolymerisatschmelzen im Heißschmelzverfahren sowie gegebenenfalls anschließender Trockung der Adhäsivschichten unter Verdunstung des Lösungsmittels oder des Wassers, wobei die Trocknung gleichzeitig in Verbindung mit dem Entschrumpfungstempern der weichmacherhaltigen PVAL-Blasfolie, z. B. bei 80 °C, erfolgen kann. Die Schichtdicken der Haftkleberadhäsivschichten liegen vorzugsweise im Bereich von 20 bis 50 $\mu$m, insbesondere 30 bis 40 $\mu$m.

Als Haftkleberadhäsivschicht werden erfindungsgemäß bevorzugt Reinacrylatcopolymerisate verwendet, die vorzugsweise als wesentliche Komponenten Monomereinheiten aus Acrylsäureestern und bzw. oder Methacrylsäureestern, ferner vorzugsweise bis zu 10 Gew.-% Monomereinheiten aus einem ethylenisch ungesättigten $C_3$- bis $C_5$-Monocarbonsäureamid und vorzugsweise bis zu 5 Gew.-% Monomereinheiten aus einer ethylenisch ungesättigten $C_3$- bis $C_5$-Monocarbonsäure, jeweils bezogen auf das copolymerisat, enthalten, oder ebenfalls bevorzugt verwendet werden Vinylester/Acrylat-Copolymerisate, die als wesentliche Komponenten vorzugsweise Monomereinheiten aus Vinylestern sowie Acrylsäureestern oder bzw. und Methacrylsäureestern und vorzugsweise bis zu 5 Gew.-% Monomereinheiten aus ethylenisch ungesättigten $C_3$- bis $C_5$-Monocarbonsäuren, jeweils bezogen auf das Copolymerisat, enthalten, wobei in allen Fällen die Einfriertemperatur $T_G$ der Copolymerisate im Bereich von -50 bis -10 °C liegt.

Die Reinacrylatcopolymerisate enthalten als Monomereinheiten vorzugsweise

| | |
|---|---|
| 70 bis 85 Gew.-%, | insbesondere 75 - 82 Gew.-%, Acrylsäure-($C_4$-$C_{10}$)alkylester, |
| 5 bis 20 Gew.-%, | insbesondere 8 - 17 Gew.-%, Methacrylsäure-($C_1$-$C_3$)alkylester, |
| 3 bis 10 Gew.-%, | insbesondere 4 - 8 Gew.-%, ethylenisch ungesättigtes ($C_3$-$C_5$)-Monocarbonsäureamid, |
| 0 bis 5 Gew.-%, | insbesondere 0,1 - 3 Gew.-%, ethylenisch ungesättigte ($C_3$-$C_5$)-Monocarbonsäure. |

Die Viskosität der Reinacrylatcopolymerisate liegt im Bereich von 20 bis 80 Pa•s, vorzugsweise bei 35 bis 50 Pa•s, gemessen an den Copolymerisatschmelzen bei 180 °C, und die Glastemperatur $T_G$ liegt im Bereich von -50 bis -10°C.

Als Acrylsäure-(C$_4$-C$_{10}$)alkylester werden solche mit linearem oder verzweigtem Alkylrest verwendet, vorzugsweise Acrylsäure-butylester, -pentylester, -hexylester, -oktylester, -tert. oktylester, -amylester, -tert. amylester, -2,2-dimethylbutylester, -3,3-dimethylbutylester, -4-ethylhexylester. Als Methacrylsäure-(C$_1$-C$_3$)-alkylester werden vorzugsweise Methacrylsäure-methylester, -ethylester, -propylester verwendet.

Als ethylenisch ungesättigte (C$_3$-C$_5$)-Monocarbonsäureamide werden vorzugsweise Acrylsäureamid, Methacrylsäureamid, Crotonsäureamid oder Vinylessigsäureamid verwendet.

Als ethylenisch ungesättigte (C$_3$-C$_5$)-Monocarbonsäurenwerden vorzugsweise Acrylsäure, Methacrylsäure, Crotonsäure oder Vinylessigsäure verwendet.

Die Herstellung der Reinacrylatcopolymerisate kann durch radikalisch initiierte Copolymerisation der Monomeren, vorzugsweise in organischen Lösungsmitteln, nach bekannten Methoden erfolgen. Die Copolymerisate können dabei unmittelbar als Lösungen oder, nach Eliminierung des Lösungsmittels, als Festharz erhalten werden.

Die Vinylester/Acrylat-Copolymerisate enthalten als Monomereinheiten vorzugsweise

| 8 bis 30 Gew.-%, | insbesondere 9,5 - 15 Gew.-%, Vinyl-(C$_2$-C$_4$)monocarbonsäureester, |
|---|---|
| 60 bis 91 Gew.-%, | insbesondere 80 - 90 Gew.-%, Acrylsäure-(C$_4$-C$_{10}$)alkylester, |
| 0 bis 10 Gew.-%, | insbesondere 0,1 - 5 Gew.-%, ethylenisch ungesättigte (C$_3$-C$_5$)-Monocarbonsäure. |

Als Vinyl-(C$_2$-C$_4$)monocarbonsäureester werden vorzugsweise Essigsäurevinylester, Propionsäurevinylester oder Buttersäurevinylester verwendet.

Als Acrylsäure-(C$_4$-C$_{10}$)alkylester werden vorzugsweise Acrylsäure-2,2-dimethylbutylester, -3,3-dimethylbutylester, -2-ethylhexylester oder insbesondere -butylester verwendet.

Als ethylenisch ungesättigte (C$_3$-C$_5$)-Monocarbonsäurenwerden vorzugsweise Acrylsäure, Methacrylsäure, Crotonsäure oder Vinylessigsäure verwendet.

Die Herstellung der Vinylester/Acrylat-Copolymerisate kann durch radikalisch initiierte Copolymerisation der Monomeren vorzugsweise in wäßriger Dispersion nach bekannten Methoden erfolgen, wobei wäßrige Copolymerisatdispersionen mit Feststoffgehalten von vorzugsweise 35 bis 60 Gew.-%, insbesondere 40 bis 55 Gew.-%, bezogen auf die wäßrige Dispersion, erhalten werden. Die Viskositäten der wäßrigen Vinylester/Acrylat-Copolymerisatdispersionen liegen im Bereich von 0,1 bis 3 Pa•s, vorzugsweise 0,2 bis 1,5 Pa•s, gemessen bei 23 °C nach DIN 53019 im Contraves-Rheometer STV. Die Glastemperatur T$_G$ der Vinylester/Acrylat-Copolymerisate liegt im Bereich von -50 bis -10 °C.

Erfindungsgemäß zur Herstellung von Haftkleberadhäsivschichten bevorzugt geeignete handelsübliche Reinacrylatcopolymerisate sind z.B. die [R] Synthacryl-Typen VSC 2291 (festes Copolymerisat) und VSC 1292 (60 gew.-%ige Copolymerisatlösung in Isobutanol) der Fa. HOECHST AG. Beide Produkte enthalten Copolymerisate aus Acrylsäureestern mit einer Glastemperatur T$_G$ von -45 °C. Als Lösungsmittel für feste Copolymerisate eignen sich insbesondere Ester, Alkohole, Ketone, Äther,
Kohlenwasserstoffe, wie z.B. Ethylacetat, Propylacetat, Butylacetat, Aceton, Methylethylketon, Ethanol, Propanol, Isopropanol, Butanol, Isobutanol, Amylalkohol, Dioxan, Tetrahydrofuran, Halogenkohlenwasserstoffe wie Methylenchlorid, Trichlorethylen, Perchlorethylen, Tetrachlorkohlenstoff, Kohlenwasserstoffe wie Pentan, Hexan, Cyclohexan, Toluol, Xylol.
Ein bevorzugt geeignetes handelsübliches Vinylester/Acrylat-Copolymerisat in wäßriger Dispersionsform ist z.B. Mowilith LDM 5650, ca. 55 gew.-%ig, der Fa. HOECHST AG, eine carboxylgruppenhaltige Acrylsäureester-Vinylacetat-Copolymerisatdispersion. Die Glastemperatur T$_G$ des Copolymerisats liegt bei -32 °C.

Als wasserunlösliche, wasser- und wasserdampfundurchlässige Kunststoffdeckfolien werden vorzugsweise übliche Polyolefinfolien, die bei üblicher Raumtemperatur auch in organischen Lösungsmitteln unlöslich sind, wie z.B. Polyethylen-, Polypropylenfolien, oder Polyamid-, Polyvinylchlorid-, Polyvinylidenchlorid-, Polycarbonat-, Polyethylenterephthalatfolien verwendet, insbesondere biaxial gestreckte Polypropylenfolien. Die Folienstärke der Kunststoffdeckfolien liegt vorzugsweise im Bereich von 10 bis 50 $\mu$m, insbesondere 25 bis 35 $\mu$m. Besonders bevorzugt sind biaxial gestreckte Polypropylenfolien von 30 $\mu$m Dicke, insbesondere solche, deren Oberfläche auf der adhäsiven Kontaktseite durch eine elektrische Coronabehandlung anoxidiert und dadurch weniger hydrophob gemacht wurde. Als bevorzugt geeignetes biaxial gestrecktes handelsübliches Polypropylenfolienmaterial kann z.B. [R] Trespaphan der Fa. HOECHST AG genannt werden. Es kann in manchen Fällen vorteilhaft sein, daß man die Haftkleberadhäsivschicht einseitig auf die wasserunlöslichen Kunststoffdeckfolien statt beidseitig auf die Gasbarrierefolie aufträgt und die Folienschichten in analoger Weise zu Verbunden kaschiert. Hierbei kann eine Coronabehandlung der adhäsiven Seite der Deckfolie vor dem Haftkleberadhäsivschichtauftrag, vorzugsweise bei der Verwendung von Polyolefinfolien, besonders vorteilhaft und wichtig sein.

Die Kaschierung der Kunststoffdeckfolien mit den die Haftkleberadhäsivschichten tragenden Gasbarrierefolien kann vorteilhaft mittels Kaschierwalzen oder auf Kalandern bei Raumtemperatur erfolgen, wobei Walzenanpressdrucke von vorzugsweise 3 bis 12 bar, insbesondere 5 bis 10 bar, angewandt werden.

Erfindungsgemäße Mehrschichtenverbundfolien bestehen vorzugsweise aus mindestens einer hochverseiften PVAL enthaltenden Gasbarriereschicht, die beidseitig Haftkleberadhesivschichten trägt und beidseitig mit jeweils einer Kunststoffdeckfolie kaschiert ist, wobei die Deckfolien gleich oder verschieden sein können. Es kann in manchen Fällen vorteilhaft sein, diese Mehrschichtenverbundfolien mit einer weiteren Gasbarrierefolie, die beidseitig mit Haftkleberadhesivschichten ausgestattet ist, von denen eine Seite eine Kunststoffdeckfolie trägt, einseitig oder beidseitig zu kaschieren und dadurch Mehrschichtenverbundfolien mit zwei oder drei oder gegebenenfalls mehr Gasbarrierefolien zu erhalten.

Die Gesamtdicke erfindungsgemäßer Mehrschichtenverbundfolien liegt vorzugsweise im Bereich von 100 bis 500 $\mu$m, insbesondere 170 bis 220 $\mu$m.

Die Sauerstoffdurchlässigkeit erfindungsgemäßer Mehrschichtenverbundfolien liegt vorzugsweise bei < 2 cm$^3$/m$^2$•d•bar bei 93 % relativer Luftfeuchtigkeit, gemessen nach DIN 53 380, und < 0,3 cm$^3$/m$^2$•d•bar bei 53 % relativer Luftfeuchtigkeit. Erfindungsgemäße Mehrschichtenverbundfolien können transparent bis opak, transluzent oder undurchsichtig pigmentiert oder gefärbt sein, wenn man z.B. in die Gasbarrierefolie gegebenenfalls Pigmente, die gefärbt sein können, oder Farbstoffe einbaut. Die erfindungsgemäßen Mehrschichtenverbundfolien können thermoplastisch verformt, vorzugsweise zu Behältnissen, insbesondere Folienbeuteln, verarbeitet, verschweißt oder versiegelt und sowohl äußerlich als auch, unauslöschbar geschützt, auf innenliegenden Schichtflächen vorbedruckt werden.

Die erfindungsgemäßen Mehrschichtenverbundfolien lassen sich vorteilhaft verwenden zur wasser- und gasdichten, insbesondere sauerstoffdichten, wasserdampfdichten, aromadichten und gegebenenfalls lösungsmitteldichten Verpackung bzw. Umhüllung einer Vielzahl von Produkten, wie z.B. Lebensmitteln, insbesondere z.B. sauerstoffempfindlichen Produkten wie Fleisch- und Wurstwaren, Fisch, Kaffee, Mayonnaisen, Speiseöle, Vitamine, Tiefkühlkost, Getränken, Gewürzen, Aromastoffen, Kosmetika, Arzneimitteln, Chemikalien, gegebenenfalls organischen Lösungsmitteln, wie z.B. Benzin, Benzol, Ester, Äther, Ketone, Mineralöle, Fette, sowie als Reifebehälterauskleidung für Frischobst und Früchte.

Die Erfindung wird durch die nachfolgenden Beispiele näher erläutert.

## BEISPIEL 1

### A) Herstellung einer weichmacherhaltigen PVAL-Gasbarrierefolie mit beidseitiger Haftkleberadhäsivbeschichtung

In einem Zwangsmischer wird analog dem Beispiel 5 der EP-OS 0 0 04 587 ein weichmacherhaltiges und vorplastifiziertes PVAL-Dry-Blend-Granulat aus folgenden Komponenten hergestellt:

| | |
|---|---|
| 1000 Gew.-Teile | Mowiol 28-99 [1] |
| 180 Gew.-Teile | Glycerin |
| 100 Gew.-Teile | Wasser |
| 100 Gew.-Teile | Mowilith-Pulver DS [2] |
| 6 Gew.-Teile | Aerosil [3]. |

[1]Mowiol 28-99 ist ein handeslüblicher, granulierter, hochverseifter PVAL vom $\overline{DP}_W$ 2000, dessen Verseifungsgrad 99,4 Mol.-%, dessen Esterzahl 8 mg KOH/g, dessen Restacetylgehalt 0,5 Gew.-% und dessen Viskosität der 4 gew.-%igen wäßrigen Lösung bei 20 °C 28 mPa•s, gemessen nach DIN 53015, betragen.
[2]Mowilith-Pulver DS ist ein homopolymeres und in Wasser redispergierbares Polymerisatpulver aus Polyvinylacetat, hergestellt durch Sprühtrocknung einer wäßrigen Polyvinylacetatdispersion.
[3]Aerosil ist ein hochdisperses, synthetisch hergestelltes Kieselsäurepulver mit großer spezifischer Oberfläche.

Das resultierende weichmacherhaltige und vorplastifizierte PVAL-Dry-Blend-Granulat wird in einem Einschneckenblasextruder mit Entgasungsvorrichtung bei üblichen Temperaturen und in üblicher Weise zu einer fehlerfreien Blasfolie von 45 $\mu$m Dicke und ca. 160 cm Schlauchumfang verarbeitet, der Schlauch nach Abkühlung auf Raumtemperatur in Längsrichtung aufgeschnitten und die resultierende ca. 160 cm breite Folie über eine Folienflachlegevorrichtung einer Beschichtungsvorrichtung für den beidseitigen Auftrag der Haftkleberadhesivschichten zugeführt. In der Beschichtungsvorrichtung durchläuft die Folie ein Auftragswalzenpaar, wobei ein beidseitiger, gleichmäßiger Auftrag einer Adhäsivschicht in Form einer wäßrigen Kunststoffdispersion erfolgt. Als Kunststoffdispersion wird unverdünntes Mowilith LDM 5650, ca. 55 gew.-%ig, eine carboxylgruppenhaltige Acrylsäureester/Vinylacetat-Copolymerisatdispersion, deren Copolymerisatanteil eine Glastemperatur $T_G$ von -32 °C besitzt, verwendet. In einem nachgeschalteten Trockenkanal erfolgt die Trocknung der Dispersionsschicht und die Eliminierung des Wassergehaltes in der Folie auf < 5 Gew.-% $H_2O$, bezogen auf den PVAL, sowie die gleichzeitige Entschrumpfung der Folie durch thermische Behandlung bei 80 °C.

## B) Herstellung einer Mehrschichtenverbundfolie mit Gasbarriereeigenschaften

Die den Trockenkanal nach Beispiel 1A verlassende entschrumpfte und beidseitig mit jeweils ca. 35 $\mu$m dicken Haftkleberadhäsivschichten selbstklebend beschichtete und weichmacherhaltige PVAL-Gasbarrierefolie wird auf Raumtemperatur abgekühlt und auf einem Kalander mit handelsüblicher Trespaphan-Folie, einer wasserunlöslichen, biaxial gestreckten und auf der Kaschierseite zusätzlich coronabehandelten Polypropylenfolie von 30 $\mu$m Dicke, die in organischen Lösungsmitteln bei Raumtemperatur unlöslich ist, beidseitig kaschiert, wobei ein Walzenpressdruck von 6 bar angewandt wird. Die resultierende Mehrschichtenverbundfolie hat eine Dicke von ca. 170 $\mu$m. Sie ist durchsichtig, weich, von mittlerer Flexibilität, thermoplastisch verformbar und schweißbar, siegelfähig und bedruckbar. Ihre Sauerstoffdurchlässigkeit, gemessen nach DIN 53380, beträgt bei 53 % relativer Luftfeuchtigkeit 0,2 $cm^3/m^2 \bullet d \bullet bar$, und bei 93 % relativer Luftfeuchtigkeit 1,4 $cm^3/m^2 \bullet d \bullet bar$. In der Meßgröße für die Sauerstoffdurchlässigkeit bedeuten $cm^3$ = durchgelassene Sauerstoffmenge, $m^2$ = qm Folienoberfläche, d = Meßdauer in Tagen, bar = $O_2$-Partialdruck.

## Patentansprüche

1. Mehrschichtenverbundfolien, die thermoplastisch verformbar sind, mit verbesserter Gasbarrierewirkung, bestehend aus mindestens einer Gasbarrierefolie auf Basis von Polyvinylalkohol (PVAL), die einseitig oder beidseitig mit einer wasserunlöslichen und gegebenenfalls in organischen Lösungsmitteln unlöslichen Polymerfolie als Wasser- und Wasserdampfsperrschicht kaschiert ist, wobei die Mehrschichtenverbundfolien auch mehrere gleiche oder verschiedene Gasbarrierefolien mit zwischenlagigen wasser- und wasserdampfsperrenden Polymerfolien enthalten können, dadurch gekennzeichnet, daß die Gasbarrierefolie hochverseiften PVAL enthält und mit der oder den wasser- und wasserdampfsperrenden wasserunlöslichen und gegebenenfalls in organischen Lösungsmitteln unlöslichen Polymerfolien über eine Adhäsivschicht, die Haftklebereigenschaften besitzt und für Wasser und Wasserdampf undurchlässig ist, einseitig oder beidseitig, vorzugsweise beidseitig, kaschiert ist.

2. Mehrschichtenverbundfolien nach Anspruch 1, dadurch gekennzeichnet, daß die Gasbarrierefolie eine Schichtdicke im Bereich von 10 bis 100 $\mu$m besitzt und PVAL enthält, der eine Esterzahl von < 10 mg KOH/g, einen Verseifungsgrad von > 98 Mol.-%, einen Restacetylgruppengehalt von < 1 Gew.-% und einen mittleren $\overline{DP}_W$ von > 1500, jeweils bezogen auf PVAL, aufweist.

3. Mehrschichtenverbundfolien nach Anspruch 1 oder 2, dadurch gekennzeichnet, daß sie als Gasbarrierefolien weichmacherhaltige PVAL-Extrusionsblasfolien enthalten, die aus vorplastifizierten, weichmacherhaltigen PVAL-Dry-Blends durch Extrusion hergestellt wurden und Gehalte von 5 bis 50 Gew.-%, vorzugsweise 12 bis 20 Gew.-%, aliphatische $C_2$- bis $C_6$-Polyole oder oligomere Poly($C_2$-$C_6$)-alkylenglykolätherpolyole, vorzugsweise Glycerin, als Weichmacher und bis zu 5 Gew.-% Wasser sowie gegebenenfalls bis zu 12 Gew.-% Fließhilfsmittel und gegebenenfalls bis zu 1 Gew.-% Antiblockmittel, jeweils bezogen auf den PVAL, aufweisen.

4. Mehrschichtenverbundfolien nach einem oder mehreren der Ansprüche 1 bis 3, dadurch gekennzeichnet, daß die Haftkleberadhäsivschichten vor der Herstellung des Folienverbundes einseitig oder beidseitig, vorzugsweise beidseitig, als Lösung in einem organischen Lösungsmittel oder als wäßrige Dispersion durch Spritzen, Walzen oder Rakeln oder in Substanz im Heißschmelzverfahren auf die Gasbarrierefolien aufgebracht, getrocknet und die Gasbarrierefolien durch thermische Behandlung bei mindestens 80 °C entschrumpft wurden.

5. Mehrschichtenverbundfolien nach einem oder mehreren der Ansprüche 1 bis 4, dadurch gekennzeichnet, daß sie als Haftkleberadhäsivschichten Reinacrylatcopolymerisate oder bzw. und Vinylester/Acrylat-Copolymerisate, deren Einfriertemperatur $T_G$ jeweils im Bereich von -50 bis -10 °C liegt, enthalten.

6. Mehrschichtenverbundfolien nach einem oder mehreren der Ansprüche 1 bis 5, dadurch gekennzeichnet, daß sie als wasser- und wasserdampfsperrende, wasserunlösliche Polymerfolien Polypropylenfolien, die vorzugsweise biaxial gestreckt und in organischen Lösungsmitteln bei Raumtemperatur unlöslich sind, Polyvinylidenchloridfolien oder Polyamidfolien enthalten.

7. Mehrschichtenverbundfolien nach einem oder mehreren der Ansprüche 1 bis 6, dadurch gekennzeichnet, daß ihre Gesamtdicke im Bereich von 100 bis 500 $\mu$m liegt und daß sie transparent bis opak, transluzent oder undurchsichtig pigmentiert und/oder gefärbt und/oder bedruckt sein können.

8. Mehrschichtenverbundfolien nach einem oder mehreren der Ansprüche 1 bis 7, dadurch gekennzeichnet, daß ihre Sauerstoffdurchlässigkeit, gemessen nach DIN 53380, bei 93 % relativer Luftfeuchtigkeit < 2 $cm^3/m^2 \cdot d \cdot bar$ beträgt.

9. Verfahren zur Herstellung von Mehrschichtenverbundfolien nach einem oder mehreren der Ansprüche 1 bis 8 durch Kaschieren verschiedener Folienschichten, dadurch gekennzeichnet, daß man in einem Einschneckenblasextruder mit Entgasungsvorrichtung durch Extrusion eines vorplastifizierten, weichmacherhaltigen PVAL-Dry-Blend-Granulats bei üblichen Temperaturen einen PVAL-Folienblasschlauch herstellt, diesen auf Raumtemperatur abkühlt, in Längsrichtung aufschneidet und über eine Folienflachlegevorrichtung führt, anschließend beidseitig über Auftragswalzen oder Rakeln oder durch Aufspritzen mit einer Haftkleberadhäsivschicht beschichtet, diese in einem Trockenkanal trocknet und die PVAL-Folie gleichzeitig durch Tempern bei 80 °C entschrumpft und erforderlichenfalls ihren Wassergehalt auf < 5 Gew.-% $H_2O$, bezogen auf den PVAL, reduziert, anschließend die erhaltene selbsthaftende PVAL-Gasbarrierefolie mittels Kaschierwalzen oder eines Kalanders einseitig oder vorzugsweise beidseitig bei Raumtemperatur mit wasserunlöslichen, wasser- und wasserdampfsperrenden Kunststoffdeckfolien unter einem Walzenpressdruck im Bereich von 3 bis 12 bar zu einem Mehrschichtenfolienverbund kaschiert und diesen als Folienbahn gewinnt.

10. Verwendung von Mehrschichtenverbundfolien nach einem oder mehreren der Ansprüche 1 bis 8 oder hergestellt nach Anspruch 9 zur wasser- und gasdichten, insbesondere sauerstoffdichten, wasserdampfdichten, aromadichten und gegebenenfalls lösungsmitteldichten Verpackung bzw. Umhüllung von Lebensmitteln, vorzugsweise Fleisch- und Wurstwaren, Fisch, Kaffee, Mayonnaisen, Speiseöle, Vitamine, Tiefkühlkost, Getränken, Gewürzen, Aromastoffen, Kosmetika, Arzneimitteln, Chemikalien, gegebenenfalls organischen Lösungsmitteln, vorzugsweise in Form von thermoplastisch geformten und thermisch verschweißten bzw. verschweißbaren oder versiegelten bzw. versiegelbaren sowie bedruckbaren Behältnissen, vorzugsweise Folienbeutel oder mit erfindungsgemäßen Folien ausgekleidete Behälter, insbesondere Reifebehälter für Frischobst und Früchte.

**Patentansprüche für folgenden Vertragsstaat : ES**

1. Verfahren zur Herstellung von Mehrschichtenverbundfolien, die thermoplastisch verformbar sind, mit verbesserter Gasbarrierewirkung, bestehend aus mindestens einer Gasbarrierefolie auf Basis von Polyvinylalkohol (PVAL), die einseitig oder beidseitig mit einer wasserunlöslichen und gegebenenfalls in organischen Lösungsmitteln unlöslichen Polymerfolie als Wasser- und Wasserdampfsperrschicht kaschiert ist, wobei die Mehrschichtenverbundfolien auch mehrere gleiche oder verschiedene Gasbarrierefolien mit zwischenlagigen wasser- und wasserdampfsperrenden Polymerfolien enthalten können, die Gasbarrierefolie hochverseiften PVAL enthält und mit der oder den wasser- und wasserdampfsperrenden wasserunlöslichen und gegebenenfalls in organischen Lösungsmitteln unlöslichen Polymerfolien über eine Adhäsivschicht, die Haftklebereigenschaften besitzt und für Wasser und Wasserdampf undurchlässig ist, einseitig oder beidseitig, vorzugsweise beidseitig, kaschiert ist, durch Kaschieren verschiedener Folienschichten, dadurch gekennzeichnet, daß man in einem Einschneckenblasextruder mit Entgasungsvorrichtung durch Extrusion eines vorplastifizierten, weichmacherhaltigen PVAL-Dry-Blend-Granulats bei üblichen Temperaturen einen PVAL-Folienblasschlauch herstellt, diesen auf Raumtemperatur abkühlt, in Längsrichtung aufschneidet und über eine Folienflachlegevorrichtung führt, anschließend beidseitig über Auftragswalzen oder Rakeln oder durch Aufspritzen mit einer Haftkleberadhäsivschicht beschichtet, diese in einem Trockenkanal trocknet und die PVAL-Folie gleichzeitig durch Tempern bei 80 °C entschrumpft und erforderlichenfalls ihren Wassergehalt auf < 5 Gew.-% $H_2O$, bezogen auf den PVAL, reduziert, anschließend die erhaltene selbsthaftende PVAL-Gasbarrierefolie mittels Kaschierwalzen oder eines Kalanders einseitig oder vorzugsweise beidseitig bei Raumtemperatur mit wasserunlöslichen, wasser- und wasserdampfsperrenden Kunststoffdeckfolien unter einem Walzenpressdruck im Bereich von 3 bis 12 bar zu einem Mehrschichtenfolienverbund kaschiert und diesen als Folienbahn gewinnt.

2. Verfahren nach Anspruch 1, dadurch gekennzeichnet, daß die Gasbarrierefolie eine Schichtdicke im Bereich von 10 bis 100 $\mu$m besitzt und PVAL enthält, der eine Esterzahl von < 10 mg KOH/g, einen Verseifungsgrad von > 98 Mol.-%, einen Restacetylgruppengehalt von < 1 Gew.-% und einen mittleren $\overline{DP}_W$ von > 1500, jeweils bezogen auf PVAL, aufweist.

3. Verfahren nach Anspruch 1 oder 2, dadurch gekennzeichnet, daß die Gasbarrierefolien Gehalte von 5 bis 50 Gew.-%, vorzugsweise 12 bis 20 Gew.-%, aliphatische $C_2$- bis $C_6$-Polyole oder oligomere Poly-($C_2$-$C_6$)-alkylenglykolätherpolyole, vorzugsweise Glycerin, als Weichmacher und bis zu 5 Gew.-% Wasser sowie gegebenenfalls bis zu 12 Gew.-% Fließhilfsmittel und gegebenenfalls bis zu 1 Gew.-% Antiblockmittel, jeweils bezogen auf den PVAL, aufweisen.

4. Verfahren nach einem oder mehreren der Ansprüche 1 bis 3, dadurch gekennzeichnet, daß die Haftkleberadhäsivschichten vor der Herstellung des Folienverbundes einseitig oder beidseitig, vorzugsweise beidseitig, als Lösung in einem organischen Lösungsmittel oder als wäßrige Dispersion durch Spritzen, Walzen oder Rakeln oder in Substanz im Heißschmelzverfahren auf die Gasbarrierefolien aufgebracht werden.

5. Verfahren nach einem oder mehreren der Ansprüche 1 bis 4, dadurch gekennzeichnet, daß die Haftkleberadhäsivschichten Reinacrylatcopolymerisate oder bzw. und Vinylester/Acrylat-Copolymerisate, deren Einfriertemperatur $T_G$ jeweils im Bereich von -50 bis -10 °C liegt, enthalten.

6. Verfahren nach einem oder mehreren der Ansprüche 1 bis 5, dadurch gekennzeichnet, daß als wasser- und wasserdampfsperrende, wasserunlösliche Polymerfolien Polypropylenfolien, die vorzugsweise biaxial gestreckt und in organischen Lösungsmitteln bei Raumtemperatur unlöslich sind, Polyvinylidenchloridfolien oder Polyamidfolien verwendet werden.

7. Verfahren nach einem oder mehreren der Ansprüche 1 bis 6, dadurch gekennzeichnet, daß die Gesamtdicke der Mehrschichtenverbundfolien im Bereich von 100 bis 500 $\mu$m liegt und daß die Mehrschichtenverbundfolien transparent bis opak, transluzent oder undurchsichtig pigmentiert und/oder gefärbt und/oder bedruckt sein können.

8. Verfahren nach einem oder mehreren der Ansprüche 1 bis 7, dadurch gekennzeichnet, daß die Sauerstoffdurchlässigkeit der Mehrschichtenverbundfolien, gemessen nach DIN 53380, bei 93 % relativer Luftfeuchtigkeit < 2 $cm^3/m^2 \cdot d \cdot bar$ beträgt.

9. Verwendung von Mehrschichtenverbundfolien, hergestellt nach einem oder mehreren der Ansprüche 1 bis 8, zur wasser- und gasdichten, insbesondere sauerstoffdichten, wasserdampfdichten, aromadichten und gegebenenfalls lösungsmitteldichten Verpackung bzw. Umhüllung von Lebensmitteln, vorzugsweise Fleisch- und Wurstwaren, Fisch, Kaffee, Mayonnaisen, Speiseöle, Vitamine, Tiefkühlkost, Getränken, Gewürzen, Aromastoffen, Kosmetika, Arzneimitteln, Chemikalien, gegebenenfalls organischen Lösungsmitteln, vorzugsweise in Form von thermoplastisch geformten und thermisch verschweißten bzw. verschweißbaren oder versiegelten bzw. versiegelbaren sowie bedruckbaren Behältnissen, vorzugsweise Folienbeutel oder mit erfindungsgemäßen Folien ausgekleidete Behälter, insbesondere Reifebehälter für Frischobst und Früchte.

**Patentansprüche für folgenden Vertragsstaat : GR**

1. Verfahren zur Herstellung von Mehrschichtenverbundfolien, die thermoplastisch verformbar sind, mit verbesserter Gasbarrierewirkung, bestehend aus mindestens einer Gasbarrierefolie auf Basis von Polyvinylalkohol (PVAL), die einseitig oder beidseitig mit einer wasserunlöslichen und gegebenenfalls in organischen Lösungsmitteln unlöslichen Polymerfolie als Wasser- und Wasserdampfsperrschicht kaschiert ist, wobei die Mehrschichtenverbundfolien auch mehrere gleiche oder verschiedene Gasbarrierefolien mit zwischenlagigen wasser- und wasserdampfsperrenden Polymerfolien enthalten können, die Gasbarrierefolie hochverseiften PVAL enthält und mit der oder den wasser- und wasserdampfsperrenden wasserunlöslichen und gegebenenfalls in organischen Lösungsmitteln unlöslichen Polymerfolien über eine Adhäsivschicht, die Haftklebereigenschaften besitzt und für Wasser und Wasserdampf undurchlässig ist, einseitig oder beidseitig, vorzugsweise beidseitig, kaschiert ist, durch Kaschieren verschiedener Folienschichten, dadurch gekennzeichnet, daß man in einem Einschneckenblasextruder mit Entgasungsvorrichtung durch Extrusion eines vorplastifizierten, weichmacherhaltigen PVAL-Dry-Blend-Granulats bei üblichen Temperaturen einen PVAL-Folienblasschlauch herstellt, diesen auf Raumtemperatur abkühlt, in Längsrichtung aufschneidet und über eine Folienflachlegevorrichtung führt, anschließend beidseitig über Auftragswalzen oder Rakeln oder durch Aufspritzen mit einer Haftkleberadhäsivschicht beschichtet, diese in einem Trockenkanal trocknet und die PVAL-Folie gleichzeitig durch Tempern bei 80 °C entschrumpft und erforderlichenfalls ihren Wassergehalt auf < 5 Gew.-% $H_2O$, bezogen auf den PVAL, reduziert, anschließend die erhaltene selbsthaftende PVAL-Gasbarrierefolie mittels Kaschierwalzen oder eines Kalanders einseitig oder vorzugsweise beidseitig bei Raumtemperatur mit wasserunlöslichen, wasser- und wasserdampfsperrenden Kunststoffdeckfolien unter einem Walzenpressdruck im Bereich von 3 bis 12 bar zu einem Mehrschichtenfolienverbund kaschiert und diesen als Folienbahn gewinnt.

2. Verfahren nach Anspruch 1, dadurch gekennzeichnet, daß die Gasbarrierefolie eine Schichtdicke im Bereich von 10 bis 100 $\mu$m besitzt und PVAL enthält, der eine Esterzahl von < 10 mg KOH/g, einen Verseifungsgrad von > 98 Mol.-%, einen Restacetylgruppengehalt von < 1 Gew.-% und einen mittleren $\overline{DP}_W$ von > 1500, jeweils bezogen auf PVAL, aufweist.

3. Verfahren nach Anspruch 1 oder 2, dadurch gekennzeichnet, daß die Gasbarrierefolien Gehalte von 5 bis 50 Gew.-%, vorzugsweise 12 bis 20 Gew.-%, aliphatische $C_2$- bis $C_6$-Polyole oder oligomere Poly-($C_2$-$C_6$)-alkylenglykolätherpolyole, vorzugsweise Glycerin, als Weichmacher und bis zu 5 Gew.-% Wasser sowie gegebenenfalls bis zu 12 Gew.-% Fließhilfsmittel und gegebenenfalls bis zu 1 Gew.-% Antiblockmittel, jeweils bezogen auf den PVAL, aufweisen.

4. Verfahren nach einem oder mehreren der Ansprüche 1 bis 3, dadurch gekennzeichnet, daß die Haftkleberadhäsivschichten vor der Herstellung des Folienverbundes einseitig oder beidseitig, vorzugsweise beidseitig, als Lösung in einem organischen Lösungsmittel oder als wäßrige Dispersion durch Spritzen, Walzen oder Rakeln oder in Substanz im Heißschmelzverfahren auf die Gasbarrierefolien aufgebracht werden.

5. Verfahren nach einem oder mehreren der Ansprüche 1 bis 4, dadurch gekennzeichnet, daß die Haftkleberadhäsivschichten Reinacrylatcopolymerisate oder bzw. und Vinylester/Acrylat-Copolymerisate, deren Einfriertemperatur $T_G$ jeweils im Bereich von -50 bis -10 °C liegt, enthalten.

6. Verfahren nach einem oder mehreren der Ansprüche 1 bis 5, dadurch gekennzeichnet, daß als wasser- und wasserdampfsperrende, wasserunlösliche Polymerfolien Polypropylenfolien, die vorzugsweise biaxial gestreckt und in organischen Lösungsmitteln bei Raumtemperatur unlöslich sind, Polyvinylidenchloridfolien oder Polyamidfolien verwendet werden.

7. Verfahren nach einem oder mehreren der Ansprüche 1 bis 6, dadurch gekennzeichnet, daß die Gesamtdicke der Mehrschichtenverbundfolien im Bereich von 100 bis 500 $\mu$m liegt und daß die Mehrschichtenverbundfolien transparent bis opak, transluzent oder undurchsichtig pigmentiert und/oder gefärbt und/oder bedruckt sein können.

8. Verfahren nach einem oder mehreren der Ansprüche 1 bis 7, dadurch gekennzeichnet, daß die Sauerstoffdurchlässigkeit der Mehrschichtenverbundfolien, gemessen nach DIN 53380, bei 93 % relativer Luftfeuchtigkeit < 2 $cm^3/m^2 \cdot d \cdot bar$ beträgt.

9. Verwendung von Mehrschichtenverbundfolien, hergestellt nach einem oder mehreren der Ansprüche 1 bis 8, zur wasser- und gasdichten, insbesondere sauerstoffdichten, wasserdampfdichten, aromadichten und gegebenenfalls lösungsmitteldichten Verpackung bzw. Umhüllung von Lebensmitteln, vorzugsweise Fleisch- und Wurstwaren, Fisch, Kaffee, Mayonnaisen, Speiseöle, Vitamine, Tiefkühlkost, Getränken, Gewürzen, Aromastoffen, Kosmetika, Arzneimitteln, Chemikalien, gegebenenfalls organischen Lösungsmitteln, vorzugsweise in Form von thermoplastisch geformten und thermisch verschweißten bzw. verschweißbaren oder versiegelten bzw. versiegelbaren sowie bedruckbaren Behältnissen, vorzugsweise Folienbeutel oder mit erfindungsgemäßen Folien ausgekleidete Behälter, insbesondere Reifebehälter für Frischobst und Früchte.

Europäisches
Patentamt

# EUROPÄISCHER RECHERCHENBERICHT

Nummer der Anmeldung

EP    92 11 1546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 239 826 (KNOTT, II ET AL.) | 1,6,10 | B32B27/30 |
| Y | * Spalte 1, Zeile 33 - Spalte 2, Zeile 44; | 2,3,9 | B65D65/40 |
| | Ansprüche 1,8,9,12,13,17,24 * | | |
| A | | 8,9 | |
| | --- | | |
| Y | GB-A-2 118 864 (UNITED STATES DEPARTMENT OF ENERGY) | 3,9 | |
| | * Ansprüche 1,2,4-6; Beispiel 1 * | | |
| | --- | | |
| Y | EP-A-0 050 288 (HOECHST AG) | 2,3 | |
| A | * Seite 3, Zeile 10 - Seite 4, Zeile 26; Anspruch 1; Beispiel 1 * | 9 | |
| | --- | | |
| A | WO-A-8 303 205 (HENRIKSEN) | 1,4-6 | |
| | * Seite 4, Zeile 25 - Seite 5, Zeile 13; Ansprüche 7,11,12; Abbildungen 2,3 * | | |
| | * Seite 7, Zeile 29 - Seite 8, Zeile 14 * | | |
| | * Seite 9, Zeile 20 - Seite 10, Zeile 2 * | | |
| | --- | | RECHERCHIERTE SACHGEBIETE (Int. Cl.5 ) |
| A | DE-U-8 214 634 (HOECHST AG) Anwendungsbeispiel | 2,3,5,9 | |
| | * Seite 2, Zeile 18 - Seite 3, Zeile 15; Ansprüche 2,4; Beispiele * | | B32B |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 23 SEPTEMBER 1992 | DERZ T. |

EPO FORM 1503 03.82 (P0403)